# EUROPÄISCHE PATENTSCHRIFT

(11) **EP 0 542 682 B1**
(45) Veröffentlichungstag und Bekanntmachung des Hinweises auf die Patenterteilung: **28.12.1994**
(21) Anmeldenummer: 92810849.7
(22) Anmeldetag: 04.11.1992
(51) Int. Cl.: F16B 13/14

(54) **Vorrichtung zum Verstärken von Wandteilen mittels aushärtender Masse**
Device for reinforcing wall parts by hardening material
Dispositif pour renforcer des parties de paroi au moyen d'un matériau durcissable

(30) Priorität: 11.11.1991 DE 4136961
(43) Veröffentlichungstag der Anmeldung: 19.05.1993
(73) Patentinhaber: HILTI Aktiengesellschaft, 9494 Schaan (LI)
(72) Erfinder: Ludwig, Wolfgang, W-8930 Schwabmünchen (DE); Hoffmann, Armin, W-8910 Landsberg (DE)
(74) Vertreter: Wildi, Roland

(56) Entgegenhaltungen:
- EP-A- 0 287 505
- DE-A- 3 912 526
- DE-B- 2 723 729

## Beschreibung

Die Erfindung betrifft eine Vorrichtung mit rohrförmigem Einfüllstutzen und Aufnahmebeutel zum Verstärken von Wandteilen auf deren Rückseite mittels aushärtender Masse, wobei die Masse über eine Oeffnung des das Wandteil durchsetzenden Einfüllstutzens von der Vorderseite des Wandteiles zugeführt und auf der Rückseite des Wandteiles in den Aufnahmebeutel gefüllt wird wobei der rohrförmige Einfüllstutzen einen verstellbaren Tiefenanschlag aufweist und der Aufnahmebeutel grossflächig mit einer Haupterstreckung in der Ebene senkrecht zur Achse des Einfüllstutzens ausgebildet ist, sowie auf seiner einfüllseitigen Fläche ein im montierten Zustand der Rückseite des Wandteiles zugewandtes Gewebe mit Oeffnungen aufweist.

Verankerungen an dünnen Wandteilen wie beispielsweise Gipskartonplatten, werden mit Befestigungsmitteln durchgeführt, die entweder auf dem Prinzip der flächenmässigen Anpressung oder Verstärkung der Wandteile unter Verwendung aushärtender Massen beruhen. Beim letzteren werden im besonderen an der Rückseite der Wandteile bessere Voraussetzungen für die Verankerungen geschaffen. Da die örtlichen Flächenpressungen vielfach zu Ausbrüchen und Zerstörungen der Wandteile führen, ist die Anwendung derartiger Methoden begrenzt. Andererseits erfordert ein einwandfreies und dosiertes Anbringen der aushärtenden Masse an der Rückseite der Wandteile im allgemeinen einen erheblichen technischen Aufwand.

Aus der DE-OS 39 12 526 ist ein Befestigungselement bekannt, das teleskopartig verschiebbare Teile aufweist, um gezielt ein bestimmtes Volumen aushärtender Masse an der Rückseite der Wandteile anzubringen. Damit entsteht ein einziger einwandfrei funktionierender Befestigungspunkt für Verankerungsmittel, wobei die Kraftaufnahme am Verankerungsmittel selbst erfolgt.

Der vorliegenden Erfindung liegt die Aufgabe zugrunde, eine einfach aufgebaute und praktisch zu handhabende Vorrichtung zu schaffen, die an der Rückseite von Wandteilen zu einer derartigen Verstärkung führt, dass mehrere Befestigungselemente wie Schrauben, Nägel, Dübel und dgl. aufgenommen werden können.

Die Aufgabe wird erfindungsgemäss dadurch gelöst, dass das Gewebe der einfüllseitigen Fläche Gewebe eine Gazehülle ist und der Aufnahmebeutel ferner auf der seiner Einfüllseite bzw. der Rückseite des Wandteiles abgewandten Fläche aus einer masseundurchlässigen Folie besteht, sowie mit dem Einfüllstutzen über elastische, in Setzrichtung zum Zentrum hin umklappbare Stege verbunden ist.

Die in den Aufnahmebeutel eintretende Masse tritt nach dem Einfüllen über den Einfüllstutzen durch die an der Rückseite des Wandteiles anliegende Gazehülle aus und kommt direkt mit dem Wandteil in Berührung, wodurch sich eine kompakte Verbindung nach dem Aushärten der Masse ergibt. Hilfreich erweisen sich bei diesem Vorgang die am Einfüllstutzen bevorzugt seitlich angebrachten mit dem Aufnahmebeutel in Verbindung stehenden Stege, die elastisch verformbar sind und bei der Montage in Setzrichtung zum Zentrum hin gebogen werden können, sich aber nach dem Durchführen durch ein im Wandteil vorhandenes Bohrloch an die Rückseite des Wandteiles anlegen und beim Aushärten der Masse eine sichere Haftung gewährleisten.

In bevorzugter Weise erstrecken sich die Stege etwa entlang der Hälfte der radialen Abmessung des Aufnahmebeutels, was ausreicht um bei der Montage den Aufnahmebeutel soweit auszusteifen, dass er durch das Bohrloch im Wandteil durchgeführt werden kann.

Vorteilhaft erweist sich ein Tiefenanschlag, der zwischen quer zur Längsachse des Einfüllstutzens umlaufenden Rippen eingeführt werden kann. Zweckmässigerweise ist ein solcher Tiefenanschlag als U-förmiges Fixierelement ausgebildet, das eine dem Abstand zwischen zwei Rippen entsprechende Stärke aufweist. Auf diese Weise kann in jeder Lage der Einfüllstutzen bei der Montage gehalten und ausgerichtet werden und es können auch unterschiedliche Dicken der Wandteile berücksichtigt werden.

Um eine ebene Vorderseite des Wandteiles herzustellen, können der überstehende Teil des Einfüllstutzens mit Hilfe des Tiefenanschlags bündig abgetrennt werden. Hierzu ist die Innenkontur des Fixierelementes im Bereich des U-Steges mit Vorteil scharfkantig ausgebildet.

Die eigentliche Durchführung einer Befestigung am Wandteil erfolgt nach der Verstärkung mit der aushärtenden Masse durch Schrauben, Nägel, Dübel und dgl. zum Teil ohne jegliches Vorbohren. Auf diese Weise können rasch und wirtschaftlich Befestigungen an dünnen Wandteilen durch eine einfache Vorrichtung für aushärtende Massen ausgeführt werden.

Schliesslich können in der Praxis Montagehilfen, wie etwa Rohre oder Umhüllungen angewandt werden, um die Durchführung des Aufnahmebeutels durch das Bohrloch im Wandteil weiter zu erleichtern und zu rationalisieren.

Die Erfindung soll nachstehend anhand der sie beispielsweise wiedergegebenen Zeichnungen näher erläutert werden. Es zeigen:
- Fig. 1: eine erfindungsgemässe Vorrichtung vor dem Einsetzen in ein Wandteil;
- Fig. 2: die Vorrichtung gemäss Fig. 1 in eingesetztem Zustand teilweise im Schnitt;
- Fig. 3: ein Draufsicht der Vorrichtung gemäss Fig. 2 in Richtung des Pfeiles A.

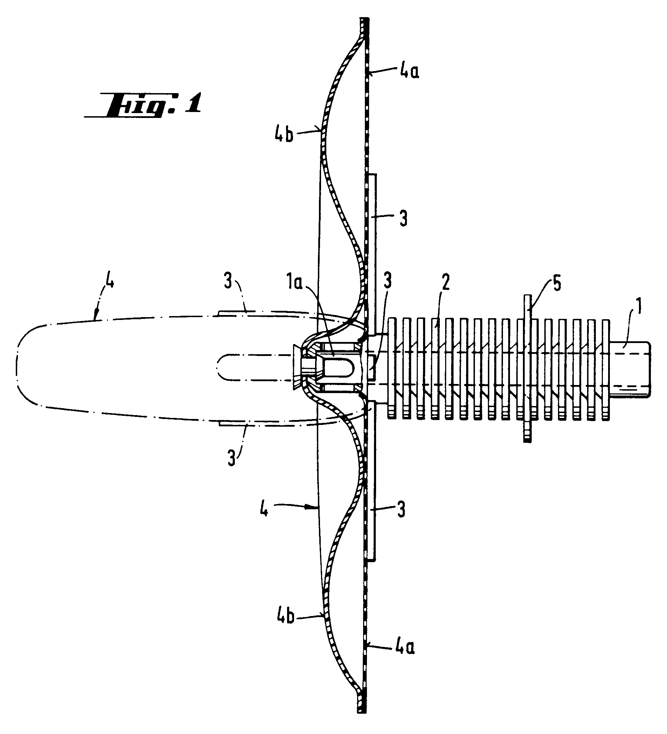

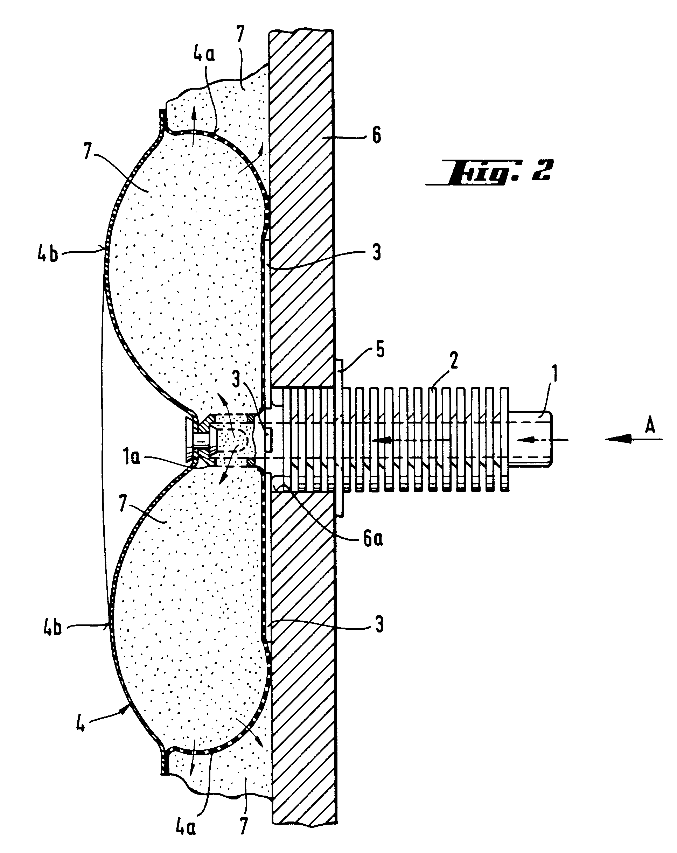

Wie insbesondere die Fig. 1 und 2 zeigen, besitzt die Vorrichtung einen rohrförmigen Einfüllstutzen 1, der quer zur Längsachse umlaufende Rippen 2 aufweist. Im Bereich des setzrichtungsseitigen Endes 1a des Einfüllstutzens 1 sind Stege 3 angeordnet, welche sich in Setzrichtung zum Zentrum hin umklappen lassen. Einerseits mit dem setzrichtungseitigen Ende 1a des Einfüllstutzens 1 sowie andererseits mit den Stegen 3 ist ein Aufnahmebeutel 4 verbunden. Dieser Aufnahmebeutel 4 besteht aus einer Gazehülle 4a und einer masseundurchlässigen Folie 4b. Während die Gazehülle 4a an der Seite entgegen der Setzrichtung, dh zur Rückseite des Wandteiles hin angeordnet ist, erstreckt sich die Folie 4b entlang der gegenüberliegenden Seite des Aufnahmebeutels 4, dh die Folie 4b ist zur Setzrichtung hin gewandt.

Wie insbesondere Fig. 1 zeigt, lässt sich der Aufnahmebeutel 4 samt Stegen 3 in Setzrichtung zum Zentrum hin zusammenklappen, so dass Stege 3 und Aufnahmebeutel 4, die in Fig. 1 strichpunktiert angedeutete Form annehmen. In dieser umgeklappten Stellung kann der Aufnahmebeutel durch ein in einem Wandteil 6 angeordnetes Bohrloch 6a hindurchgeführt werden, wie dies Fig. 2 zeigt. Nach dem Durchführen durch das Bohrloch 6a und Erreichen der Rückseite des Wandteiles 6 können die Stege 3 wieder in ihre in Fig. 1 gezeigte Ursprungsstellung zurückklappen und nehmen damit auch den Aufnahmebeutel 4 mit, so dass sich die Gazehülle 4a an die Rückseite des Wandteiles 6 anlegt.

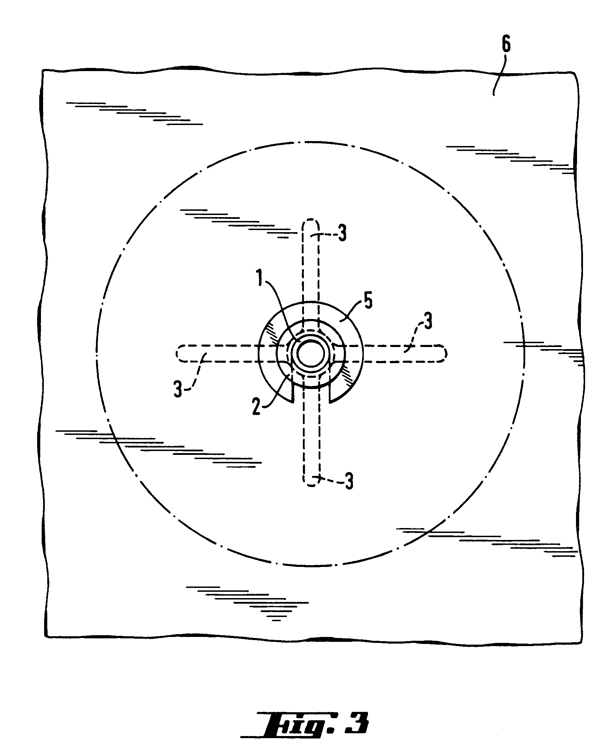

Wie die Fig. 1 und 2 und insbesondere auch die Fig. 3 zeigen lässt sich zwischen die umlaufenden Rippen 2 ein U-förmiges Fixierelement 5 einschieben, welches als Tiefenanschlag dient. Dieses Fixierelement 5 wird vorzugsweise erst nach dem Durchführen durch das Bohrloch 6a so nahe wie möglich entlang der Vorderseite des Wandteiles 6 zwischen zwei Rippen 2 eingeschoben. Dadurch kann die Vorrichtung, dh insbesondere der Einfüllstutzen 1 nicht mehr tiefer in das Bohrloch 6a hineingelangen. Diese Fixierung ist insbesondere dann von grosser Wichtigkeit, wenn der Aufnahmebeutel 4 mit einer aushärtenden Masse 7 aufgefüllt wird, wie dies in Fig. 2 dargestellt ist.

Das Auffüllen des Aufnahmebeutels 4 mit aushärtender Masse 7 hat zur Folge, dass die aushärtende Masse 7 einerseits den Aufnahmebeutel 4 auffüllt und andererseits durch die Gazehülle 4a zur Rückseite des Wandteiles 6 hin austreten kann und unter Erzeugung eines Druckes zwischen Rückseite des Wandteiles 6 und Aufnahmebeutel 4 eine Verstärkung erzeugt. Im Zusammenhang mit dem Erzeugen dieses Druckes ist das als Tiefenanschlag wirkende Fixierelement 5 von massgebender Bedeutung.

Die Ausbildung des Fixierelementes 5 samt seiner U-förmigen Form ist der Fig. 3 entnehmbar sowie auch die Anordnung der Stege 3, bei welchen es sich beispielsweise um vier an der Zahl handeln kann und die vorzugsweise radial verlaufen.

Nach erfolgtem Aushärtevorgang der Masse 7 hat die Vorrichtung ihre endgültige Position erreicht, so dass sich der Einfüllstutzen 1 in seiner Lage nicht mehr verändern kann. Nachdem dem Einfüllstutzen 1 damit keine weitere Funktion mehr zukommt, kann das die Vorderseite des Wandteiles 6 überragende Teil abgetrennt werden, beispielsweise mittels des Fixierelementes 5, das zu diesem Zwecke an seiner Innenkontur scharfkantig ausgebildet sein kann und somit die Funktion eines Schneidwerkzeuges erfüllt. Im gesamten Bereich des Wandteiles 6, welcher von der aushärtenden Masse 7 hinterstützt ist, können nach erfolgter Aushärtung Befestigungselemente wie Schrauben, Nägel oder dgl. angebracht werden. Im einzelnen steht damit der gesamte in Fig. 3 kreisförmig strichpunktierte Bereich für solche Befestigungselemente zur Verfügung.

## Patentansprüche

1. Vorrichtung mit rohrförmigem Einfüllstutzen (1) und Aufnahmebeutel (4) zum Verstärken von Wandteilen (6) auf deren Rückseite mittels aushärtender Masse (7), wobei die Masse (7) über eine Oeffnung des das Wandteil (6) durchsetzenden Einfüllstutzens (1) von der Vorderseite des Wandteiles (6) zugeführt und auf der Rückseite des Wandteiles (6) in den Aufnahmebeutel (4) gefüllt wird, wobei der rohrförmige Einfüllstutzen (1) einen verstellbaren Tiefenanschlag aufweist und der Aufnahmebeutel (4) grossflächig mit einer Haupterstreckung in der Ebene senkrecht zur Achse des Einfüllstutzens (1) ausgebildet ist, sowie auf seiner einfüllseitigen Fläche ein im montierten Zustand der Rückseite des Wandteiles (6) zugewandtes Gewebe mit Oeffnungen aufweist, **dadurch gekennzeichnet**, dass das Gewebe der einfüllseitigen Fläche eine Gazehülle (4a) ist und der Aufnahmebeutel (4) ferner auf der seiner Einfüllseite bzw. der Rückseite des Wandteiles (6) abgewandten Fläche aus einer masseundurchlässigen Folie (4b) besteht, sowie mit dem Einfüllstutzen (1) über elastische, in Setzrichtung zum Zentrum hin umklappbare Stege (3) verbunden ist.

2. Vorrichtung nach Anspruch 1, dadurch gekennzeichnet, dass sich die Stege (3) etwa entlang der Hälfte der radialen Abmessung des Aufnahmebeutels (4) erstrecken.

3. Vorrichtung nach Anspruch 1 oder 2, dadurch gekennzeichnet, dass der Einfüllstutzen (1) an seiner Aussenkontur quer zur Längsachse umlaufende Rippen (2) enthält.

4. Vorrichtung nach Anspruch 3, dadurch gekennzeichnet, dass ein zwischen die Rippen (2) des Einfüllstutzens (1) einführbares U-förmiges Fixierelement (5) als Tiefenanschlag und Abtrennmittel für den Einfüllstutzen (1) vorgesehen ist.

## Claims

1. A device with tubular filler socket (1) and a receiving bag (4) for reinforcing wall sections (6) at their rear by means of a hardening substance (7), in which respect the substance (7) is delivered via an aperture of the filler socket (1) which passes through the wall section (6) from the front of the wall section (6) and filled at the rear of the wall section (6) into a receiving bag (4), and that the tubular filler socket (1) comprises an adjustable depth stop and the receiving bag (4) is over a large surface arranged with a main extent in the plane vertically to the axis of the filler socket (1), and at its filler side with a fabric with apertures which in its mounted state faces towards the rear of the wall section (6), **characterised in that** the fabric of the filler surface is a gauze sleeve (4a), and that the receiving bag (4) is at its filler side or at the surface facing away from the rear of the wall section (6) made of a foil (4b) which is impermeable to the substance and is connected to the filler socket (1) via elastic webs (3) which are foldable in the setting direction towards the centre.

2. A device according to claim 1, **characterised in that** the webs (3) extend approximately along half the radial dimension of the receiving bag (4).

3. A device according to claim 1 or 2, **characterised in that** the filler socket (1) has ribs (2) which extend transversely to the longitudinal axis along its outer contour.

4. A device according to claim 4, **characterised in that** a U-shaped fixing element (5) which is inserted between the ribs (2) of the filler socket (1) is provided as a depth stop and separating means for the filler socket (1).

## Revendications

1. Dispositif avec tubulure de remplissage (1) et sac de réception (4) pour renforcer des parties de paroi (6) sur leur face arrière au moyen d'un matériau durcissable (7), le matériau (7) étant amené par l'intermédiaire d'une ouverture de la tubulure de remplissage (1) traversant la partie de paroi (6), à partir de la face avant de la partie de paroi (6), et introduit dans le sac de réception (4) à la face arrière de ladite partie de paroi (6), la tubulure de remplissage (1) comportant une butée de profondeur réglable et le sac de réception (4) présentant une grande surface avec une extension principale dans le plan perpendiculaire à l'axe de la tubulure de remplissage (1) et, sur sa surface située du côté remplissage, un tissu avec des orifices qui, à l'état monté, est tourné vers la face arrière de la partie de paroi (6), caractérisé en ce que le tissu de la surface située du côté remplissage est une enveloppe de gaze (4a), et que, sur la surface opposée au côté de remplissage et respectivement la face arrière de la partie de paroi (6), le sac de réception (4) est en outre constitué d'une feuille (4b) laissant passer le matériau, et est rattaché à la tubulure de remplissage (1) par l'intermédiaire de barrettes (3) élastiques rabattables vers le centre dans la direction de pose.

2. Dispositif selon la revendication 1, caractérisé en ce que les barrettes (3) s'étendent sensiblement le long de la moitié de la dimension radiale du sac de réception (4).

3. Dispositif selon l'une des revendications 1 ou 2, caractérisé en ce que la tubulure de remplissage (1) comprend sur son contour extérieur des nervures (2) circulaires orientées perpendiculairement à l'axe longitudinal.

4. Dispositif selon la revendication 3, caractérisé en ce qu'un élément de fixation (5) en U insérable entre les nervures (2) de la tubulure de remplissage (1), est prévu comme butée de profondeur et comme moyen de séparation pour la tubulure de remplissage (1).
